# EUROPEAN PATENT APPLICATION

(11) **EP 1 308 864 A1**
(43) Date of publication of application: **07.05.2003**
(21) Application number: 01410145.5
(22) Date of filing: 02.11.2001
(51) Int. Cl.: G06F 17/60

(54) **Passenger management system and method and electronic device**

(71) Applicant: Hewlett-Packard Company, Palo Alto, CA 94304 (US)
(72) Inventor: Goldberg, Douglas, 38330 Montbonnot (FR)
(74) Representative: Lloyd, Richard Graham (GB)

(57) **Abstract**

The present invention relates to a system for improving the experince of a passenger when they embark on a journey. The passenger experiences a significant number of inconveniences which include having to carry and present paper documents at various stages within an airport and being subject to various security checks.

The present invention provides a passenger management system which, in conjunction with an electronic information device, in the form of an electronic boarding card or mobile communication device, improves the passenger's experience by reducing the need to queue, where possible, and providing up to date information to ensure that the passenger is kept apprised of events within the airport. Still further, the passenger's travel itinerary, ticket and identification details are all stored on the electronic device. The device can provide information to the passenger and be periodically interrogated by the passenger management system remotely to allow the passenger to be traced within the airport.

## Description

### Field of the Invention

The present invention relates to a passenger management system and method as well as to an electronic device for use in such a system and method.

### Background of the Invention

The typical passenger experience when travelling by air, either domestically or internationally, is generally unpleasant. There are a significant number of inconveniences for the passenger which include the need to queue several times before boarding. The queues may be found at the check-in desk where the passenger's travel documents are checked and their baggage is checked-in. A further queue is experienced at the security check-in where the passenger's hand-baggage is checked. Finally, one must form an orderly queue when the time for boarding a desired flight is announced and, once again, a paper boarding card for processing is presented. The passenger is inconvenienced greatly by having to manage and repeatedly present paper documents at various stage of their progress throughout the airport.

Furthermore, information relating to the current status of a flight is not widely available other than at information desks and numerous display terminals distributed throughout the airport in passenger waiting areas. Often a passenger may not be located within a waiting area and may, for instance, be having lunch or dinner before departure. Therefore, the lack of availability of display screens while having lunch or within a restaurant represents an inconvenience to the passenger as does the need to repeatedly observe the display screens while one is having lunch.

It is an object of the present invention at least to mitigate some of the problems of the prior art.

### Summary of the Invention

Accordingly, a first aspect of the present invention provides a passenger management system comprising at least one transceiver, disposed so as to be effective within a building, operable under the control of data received from a monitoring station to at least receive data transmitted by an electronic information device of a user or to transmit data to the electronic information device for output to the user; the electronic device being within the building.

Advantageously, the passengers of an airline using an embodiment of the present invention can be kept informed of the status of their flight without having to be seated within viewing distance of one of the conventional passenger display information terminals.

Within today's security conscious environment, greater emphasis is being placed upon security checks. This invariably leads to increased delays at security check-in. Clearly such increased delays are, from the perspective of the management and efficiency of the airport, undesirable as it detracts from the passenger's experience of the airport and reduces the number of passengers per unit time processed by the airport. However, the use of the invention in eradicating queues or reducing queues elsewhere within the airport allows the management of the airport to recover some of the lost time associated with the increased security checks.

Furthermore, having collected an electronic boarding card, the need to stand in orderly queues can be eliminated or reduced.

Preferred embodiment provide a passenger management system in which at least one of the transceivers is located at a check-in desk of an airport; the transceiver being arranged automatically to interrogate the electronic information device when that device is within the vicinity of the check-in desk transceiver; and to report any data collated from the device in response to the interrogation to a data base accessible from the monitoring station.

Since the interrogations of the device are conducted automatically, the passenger need not be delayed by the queuing that is associated with manual inspection of documents.

Still further embodiments provide a passenger management system, further comprising a plurality of transceivers geographically distributed throughout the building and means, responsive to detecting the presence of the electronic device within a region of the building serviced by a specific transceiver, for selectively activating that transceiver to convey an message to the user of the electronic device or to derive data from the electronic device for subsequent processing by the remote monitoring station.

Preferred embodiments of the present invention also provide electronic boarding card readers such as, for example, magnetic card readers or card-chip readers, situated at the check-in desk, security desk and passenger boarding waiting areas. The passenger inserts the card into the reader, which reads the passenger information stored on the card. The read information can be used to track the position of a passenger as they move throughout the airport or at least reduce the size of a search area when attempting to locate the passenger.

Optionally, induction loop based card readers are geographically distributed throughout the airport. Each of these card readers, when an electronic boarding card passes through the electromagnetic field generated by the induction loop, causes the card to register the passenger information system. The passenger information system, knowing the position of the induction loop based card reader, can also identify the location of the passenger to whom the electronic boarding card was issued. Therefore, assuming that the electronic boarding card is about the person to whom it was issued, the location of that person can be identified. This has particular advantages in the case of passengers who either arrive at the airport late or who are sufficiently distracted to miss the boarding announcement for their flight. In the first instance, the passenger information system can inform airport personnel that the passenger is within the airport and can identify the location of that passenger. In the second instance, the airport personnel can proceed to the last known location of the electronic boarding card and, hopefully, identify the missing passenger.

Alternatively, an embodiment is provided in which locally effective speakers for making local announcements within geographically restricted regions of the airport are distributed throughout the airport. Having identified the location of a passenger, a local announcement can be made via the local announcement speakers that is targeted at the missing passenger. It is hoped that any such local announcement would attract the attention of the passenger and cause them to proceed to their boarding gate.

Still further, an embodiment of the present invention provides a number of geographically distributed transceivers via which messages can be transmitted to a communication device, such as, for example, a mobile telephone. The messages can inform the passenger of the need to proceed to the boarding gate or some other designated area.

A preferred embodiment provides for the transmission of a text message to the mobile telephone of the passenger. The text message is intended to inform the passenger of their need to board the aeroplane. Preferably, the message transmitted to the mobile telephone of the passenger causes the mobile telephone to inform the passenger of the receipt of the text message. Conventionally, any such notification takes the form of the usual ringing or vibrating that is currently associated with mobile phones.

Alternatively, an embodiment is provided in which telephone call is established with the mobile communication device. The telephone call causes the mobile telephone of the passenger to ring. Upon answering, an automatically generated voice message is played to the passenger that informs them of the need to proceed to, for example, baggage check-in, security check-in or the boarding gate.

Optionally, an embodiment provides for the receipt of a response, such as the depression of a DTMF key, to confirm that the passenger has received the notification.

Still further embodiments provide a passenger information system comprising means for receiving an incoming telephone call or text message generated by a mobile communication device of a passenger. The incoming call or text message can represent, for example, a request for information relating to the departure time of the flight. Alternatively or additionally, the request may relate to information relating to the boarding gate for a flight of interest for the passenger.

Often part of the delay encountered in checking in baggage is due to the need to collate information relating to one's flight and oneself and to arrange for a ticket to be printed which is then attached to one's baggage. Suitably, an embodiment provides an airport passenger management system comprising a baggage ticket dispenser which, in response to input of information derived from the electronic boarding card or in response to input of the electronic boarding card, dispenses a baggage ticket to be affixed to article to be transported in the hold of an aircraft.

Furthermore, an embodiment provides a mobile communication device to which flight information and authorisation to board a flight can be downloaded. Preferably, the mobile communication device is a mobile telephone and the information is downloaded and stored in non-volatile memory of the mobile telephone. Preferably, the non-volatile memory comprises the SIM card of the mobile telephone device.

An embodiment preferably provides an electronic boarding card which provides access to a restricted access area. Suitably, the electronic boarding card can be used to gain admittance to an executive lounge.

Furthermore, embodiments can be realised in which notifications can be transmitted to the electronic device, that is, the electronic boarding card or mobile communication device, of the passenger. The notifications, in addition to or instead of the official airport notifications, may comprises advertisements for third party products or for further potential travel details of a travel agent or service provider.

It will be appreciated that the above described electronic boarding card or mobile communication device will greatly increase the ease with which the holder can move throughout the airport. Generally, movement within an airport is greatly restricted. In the event that the electronic board card or mobile communication device fell into unscrupulous hands, the security of the airport may be compromised. Accordingly, an aspect of the present invention provide an electronic boarding card or mobile communication device which requires user actuation to ensure that the passenger information remains valid. The user actuation may be the periodic input of a password when requested or at predetermined intervals. The need for user actuation may be instigated by the device itself or in response to a message received from the passenger management system.

### Brief Description of the Drawings

Embodiments of the present invention will now be described, by way of example only, with reference to the accompanying drawings in which:
figure 1 shows schematically an embodiment of a passenger information system according to the present invention;
figure 2 illustrates an electronic information device in the form of a mobile communication device;
figure 3 shows an embodiment of electronic information device in the form of an electronic boarding card; and
figure 4 depicts a flowchart for processing a passenger according to an embodiment.

### Description of the Preferred Embodiments

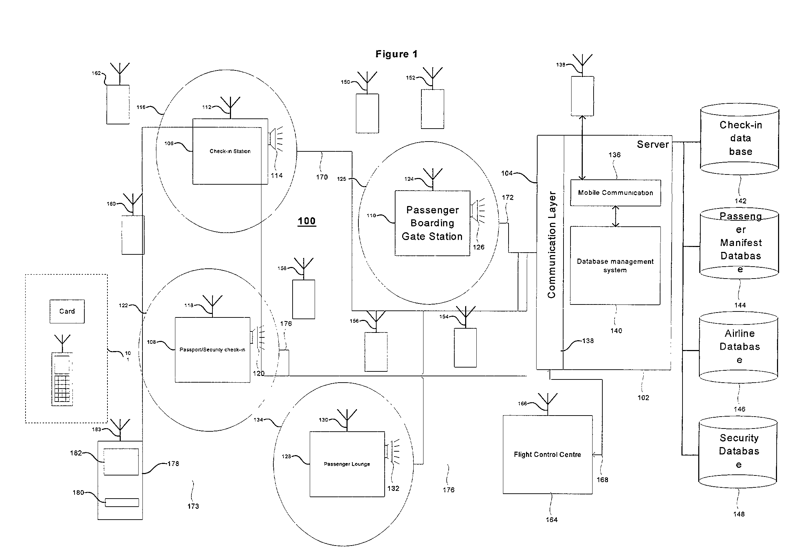

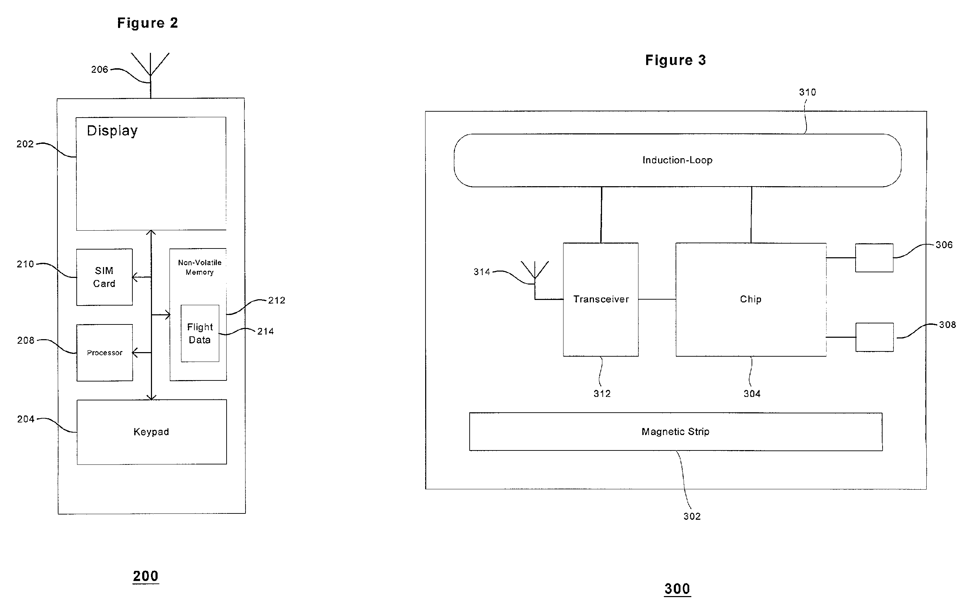

Referring to figure 1 there is shown an embodiment of a passenger management system 100. The passenger management system 100 comprises a central server 102 connected via communication software 104 to a number of remote stations 106, 108, 110 and 128. The first remote station 106 is a passenger check-in station. The passenger check-in station 106 comprises an antenna 112 and a loud speaker 114. The antenna 112 is used to communicate wirelessly with a mobile communication device belonging to the passenger. The mobile communication device may be, for example, a mobile telephone or WAP telephone. Alternatively, the mobile communication device may be a credit card sized electronic boarding card. Both of the mobile telephone and the electronic boarding card are described hereafter with reference to figures 2 and 3.

The local speaker 114 is used for making local announcements that are audible within a predetermined zone or region 116 of the airport.

The second check-in station 108 is the passport/security station. The conventional security checks that are performed in relation to hand-luggage are undertaken at the passport/security station 108. It can be seen that the passport/security station 108 also comprises a communication antenna 118 and a passenger announcement speaker 120. Again, the communication antenna 118 is used for wireless communication with the mobile communication device. The passenger announcement speaker 120 is effective within a predetermined zone 122 for making audible announcements to passengers within that zone 122.

A third station, passenger boarding gate station, 110 also comprises an antenna 124 and a corresponding passenger announcement speaker 126. Again, the antenna 124 is used to support wireless communication with the mobile communication device 101 of a passenger within the region 125 surrounding the gate..

Still further, there is provided a passenger lounge station 128 which has an associated antenna 130 and corresponding passenger announcement speaker 132. The antenna and/or the passenger announcement speaker are effective to support communication with the mobile device 101 and to make audible announcements within a corresponding passenger lounge zone 134.

It can be appreciated that the server 102 comprises mobile communication management software and associated hardware 136 and 138 for supporting communication with the various stations 106, 108, 110 and 128 as well as direct communication with the mobile communication device 101. Database management software 140 is used to process and store data derived from the various stations 106, 108, 110 and 128. The collated data is stored in corresponding databases 142 to 148. The databases 142 to 148 comprise a check-in database 142. The check-in database stores data derived from the check-in station 106, which relates to the passenger having checked-in. The check-in data includes an identifier that is unique to the mobile communication device 101. The passenger manifest data base 144 comprises information about the passenger such as their age, name, address and flight details. Additionally the passenger manifest database contains data to allow a message or telephone call to be sent to or established with the mobile communication device 101 of the passenger. For example, if the mobile communication device is a mobile telephone or WAP enabled telephone as is shown in figure 2, the contact information may be the telephone number of the telephone or a messaging gateway or, in the case of the mobile communication device 101 being an electronic boarding card as shown in figure 3, a unique identifier for addressing that electronic boarding card 101 together with an appropriate payload.

The passenger manifest database 144 also contains an up to date indication of the location within the airport of the passenger carrying the mobile communication device. The location of the mobile communication device 101 (and hence the location of the passenger) is tracked using a number of locating antennas 150 to 162. Optionally, the passenger station antennas 112, 118, 124 and 130 may also be used to track or determine passenger location. Various techniques may be used to determine more precisely the current location of a passenger. Those techniques include a simple technique which is based upon the antenna receiving the strongest signal or more complex techniques which use triangulation, again based on signal strength, of information derived from three of the locating antennas 150 to 162.

An airline database 146 contains up to date flight information for all incoming and outgoing flights which intend to use the airport in which the passenger management system 101 is located. The airline database comprises outward and return flight data, flight numbers, departure and/or arrival times and information indicating whether or not the flight has been delayed and, if so, the extent of that delay.

The security database 148 comprises information collated at the security station. This information includes data relating to nationality, travel plans, various restrictions associated with the movement of the individual and identification/security codes. The security information may additionally include sensitive information on the personal history of the user of the device such as political allegiances, criminal record etc. In the event that any such sensitive information is detected by the central monitoring station 102, an alarm may be raised and the individual of interest may be brought to the attention of the security personnel of the airport.

The airline database 146 is kept up to date by receiving information from a flight control centre 164. The flight control centre communicates either wirelessly via an associated antenna 166 or via a landline 168 with the server 102.

Furthermore, each of the passenger stations and/or the locating antennas 150 to 162 may also be connected to the server 102 via corresponding physical links 170 to 176.

Referring to figure 2, there is shown an electronic information device according to an embodiment. It can be appreciated that the preferred embodiment is a mobile telephone 200. The mobile telephone 200 comprises the conventional display 202, keypad 204 and RF antenna 206. A microprocessor 208 is used to control the operation of the mobile phone. A SIM card 210, as is conventional, is also provided within an appropriate slot of the mobile telephone 200. A non-volatile memory 212 is used to store flight identification data 214 and data to be output on the display 202 of the telephone device. The output data may represent an indication of the current status of the flight for which the passenger is waiting. That indication may include, for example, an indication of the anticipated boarding gate, estimated departure time etc. Furthermore, the display 202 may be used to provide instructions to the passenger as to which course of action should be adopted having recently performed a previous action. For example, the passenger can be instructed to proceed to the passenger lounge or, in the event of boarding, the passenger can be instructed to proceed to the appropriate boarding gate for their flight.

It will be appreciated that the airport passenger management system can also receive from, for example, travel agents or via the Internet, flight booking requests and information on flights that are scheduled to leave from the airport in which the passenger information system is installed.

Information transmitted by the server 102, via its antenna 138, intended to be received by the mobile telephone 200, is also stored in the non-volatile memory 212.

Referring to figure 3, there is shown a schematic embodiment of an electronic information device in the form of an electronic boarding card 300. The electronic boarding card 300 is preferably credit card sized. The electronic boarding card 300 comprises a magnetic strip 302 which may be used in conjunction with a magnetic strip card reader (not shown) to output data which represents passenger details and flight information details. The card reader would be located at one of the data collection stations 106, 108, 110 and 128. Alternatively, or additionally, the electronic boarding card 300 may comprise a chip 304 that is accessed via corresponding contact pads 306 and 308 as is known within the art. The chip 304 is used to store all of the data relating to the passenger, the flight and any data received from the server 102. The card can be inserted into an appropriate card chip reader which may be located at the passenger stations 106, 108, 110 and 128.

As described above in relation to the mobile telephone embodiment, the same or similar information is also stored on the chip.

The electronic boarding card 300 also comprises an induction coil 310 which is used to convert RF power into a DC signal for driving the chip 304 or for conveying information to the chip. The electronic boarding card 300 additionally comprises a transceiver 312 and an associated antenna 314. The transceiver 312 and antenna 314 are used to receive from and to transmit data to the server 102. The data exchange can be automatic in response to interrogatories issued by the server 102.

Preferably, the mobile communication device 101, whether it is in the form of an electronic boarding card 300 or a mobile telephone 200, is interrogated periodically and/or at least when it is inserted into an appropriate card reader, to read the data contained within the memory (not shown) of the chip. This data is used to track the progress of the passenger throughout the passenger processing system and to determine where, in the airport, the passenger is currently situated.

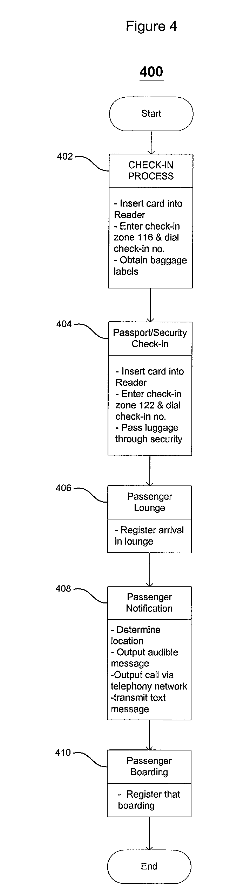

Referring to figure 4 there is shown a flow chart 400 of the possible processing steps that may be undertaken by the passenger information system 100 upon the arrival, check-in and subsequent use of the airport prior to boarding of the aeroplane by a passenger.

The passenger upon initial arrival at the airport approaches the check-in station 106 and undertakes a check-in procedure as illustrated at step 402. Step 402 varies according to whether the passenger's device 101 is in the form of a mobile telephone or a electronic credit card sized boarding card. In the second instance, the passenger can insert their credit card sized boarding card 300 into an appropriate card reader (not shown). Upon insertion, the flight details and passenger details are read from the memory of the chip 304 and transmitted to the server 102 where the database management system 140 updates the appropriate database to show that the passenger has at least arrived at the airport. If the electronic device 101 is in the form of a mobile telephone, the passenger can log their presence by dialling an appropriate telephone number which, in a preferred embodiment, causes an SMS text message to be transmitted from the mobile telephone 300 to the server 102. The SMS text message contains passenger manifest data and flight information. The database management system 140 uses the data contained within the SMS text message to update the check-in data base 142 and passenger manifest database 144 to show that the passenger has arrived in the airport.

Optionally, the server 102 may transmit instructions to the passenger which provide an indication of the subsequent courses of action open to the passenger. These instructions may include, for example, instructions to obtain baggage or luggage labels from a baggage/luggage label terminal (not shown). At such a terminal, the passenger, in the event that the electronic boarding card is the credit card sized boarding card, places the card 300 in an appropriate card reader of the baggage/luggage terminal. Having placed the card in the reader, the terminal issues a baggage label to be placed on one's luggage. The baggage can then be put onto a baggage conveyor (not shown) where it is directed to the appropriate loading bay for subsequent loading onto the aircraft.

At step 404 the passenger proceeds to passport/security check-in desk 108 where the passport will be manually checked. Additionally, the mobile communication device 101 of the passenger is either inserted into a suitable card reader (not shown) or the passenger dials an appropriate number, which may optionally be displayed at the desk, to register the fact that they have arrived or are proceeding to passport/security check-in. It will be appreciated that the conventional X-ray scan will be performed for any hand luggage. The server, in response to receiving the above notification, updates the databases accordingly.

Conventionally having checked-in and passed through passport security, the passenger may retire to the passenger lounge. The registration of their arrival in the passenger lounge maybe achieved automatically, in the event that they are carrying the credit sized electronic boarding card. Alternatively, the passenger can be requested to dial an appropriate number or to send an appropriate text message to register their arrival at the passenger lounge.

Eventually, the aeroplane will be ready for boarding. Suitably, the server 102 will transmit a general announcement to all areas in which passengers may be reasonably expected to be located. The announcement will inform the passengers to proceed to the boarding gate.

In the event that a passenger that has either a mobile communication device as described with reference to figure 2 or an electronic boarding card as described with reference to figure 3 does not proceed in good time to the boarding gate, the server will retrieve from the passenger manifest database 144 data which allows a message to be specifically directed to the errant passenger. It will be appreciated that the message can take the form of a local announcement via one of the local announcement speakers 114, 120, 126 or 132. Alternatively, it may take the form of a telephone call to the mobile device of the errant passenger. Preferably, the credit card sized electronic boarding card 300 comprises means for producing an audible tone to alert the passenger that they ought to proceed to the boarding gate.

Optionally, upon hearing the tone, the passenger may proceed to a card reader which has an associated screen, such as information terminal 178, where the credit card sized boarding card can be inserted into a card reading slot 180. In response to any such insertion, the information terminal contacts the server to identify the terminal and to transmit data read from the card to the server. In response, the server transmits, via an antenna 183, the message intended for the passenger to the terminal. The message is subsequently displayed on a screen 182 of the information terminal 178. Accordingly, the passenger can be informed of the need to proceed to the boarding gate.

It will be appreciated that the information terminals, if a number of them were distributed throughout the airport, could be used to convey any type of message or instruction to the passenger upon insertion of their card into the card reader slot.

It can be appreciated from the above that the degree of human interaction required to process a passenger is significantly reduced as compared to conventional airports. Therefore, it is anticipated that a passenger may proceed through the passenger check-in process from initial arrival to boarding of the aeroplane with significantly less queuing and with greater speed.

Advantageously, since the above-described registration, interrogations and tracking are performed automatically, the passenger needs to interact with airport personnel to a reduced extent as compared with the prior art. This is particularly so in the case of automatic check-in etc when passing an appropriate transceiver station with which the electronic device can automatically interact.

Although the above embodiments have been described with reference to an electronic device that is an electronic boarding card or a mobile communication device embodiment can be realised in which other types of personal communication devices can be used. For example, Personal Digital Assistants and like may also be used to realised embodiment of the present invention.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

## Claims

1. An electronic information device comprising a transceiver, a memory and a processor for performing at least one function; the transceiver is arranged to exchange information, stored in the memory, with a remote communication station; the memory being arranged to store at least identification data relating to the user and travel itinerary data including third party transportation data; the processor being arranged to output, using the transceiver, at least one of the identification data and the travel itinerary data for processing by the remote communication station.

2. An electronic information device as claimed in claim 1, in which the processor is arranged to output the data in response to actuation of an input device of the electronic information device.

3. An electronic information device as claimed in any preceding claim, in which the processor is arranged to output the data in response to receipt, by the transceiver, of a signal issued by the remote communication station.

4. An electronic information device as claimed in claim 3, further comprising a radio antenna via which the transceiver receives the signal.

5. An electronic information device as claimed in either of claims 3 and 4, further comprising at least one electrical contact via which the transceiver receives the signal.

6. An electronic information device as claimed in any preceding claim, further comprising means for requesting input of data to validate at least one of the identification data and the travel itinerary data.

7. An electronic information device as claimed in any preceding claim, further comprising a speaker for outputting an audible tone in response to receipt of a second signal by the transceiver.

8. A electronic information device as claimed in any preceding claim in which the travel itinerary data comprises at least one of check-in status data, baggage check-in data, transport time table data and transport class data.

9. An electronic information device as claimed in any preceding claim, further comprising a visual display for displaying data.

10. An electronic information device as claimed in claim 9, in which the processor is arranged to display directions to be followed to guide a user throughout a building.

11. An electronic information device as claimed in either of claims 9 and 10, in which the data output to visual display comprises instructions to proceed to an identified location within a building.

12. An electronic information device as claimed in any preceding claim, in which the device is one of a smart card, a portable computer, a personal digital assistant or a mobile telephone.

13. A passenger management system comprising at least one transceiver, disposed so as to be effective within a building, operable under the control of data received from a monitoring station to at least receive data transmitted by an electronic information device of a user or to transmit data to the electronic information device for output to the user; the electronic device being within the building.

14. A passenger management system as claimed in claim 13, in which the transceiver is at least one of an induction loop based transceiver, a radio-wave transceiver, a card-chip reader or a magnetic card reader.

15. A passenger management system as claimed in either of claims 13 and 14, further comprising a plurality of transceiver geographically distributed throughout the building.

16. A passenger management system as claimed in claim 15, in which at least one of the transceivers is located at a check-in desk of an airport; the transceiver being arranged automatically to interrogate the electronic information device when that device is within the vicinity of the check-in desk transceiver; and to report any data collected from the device in response to the interrogation to a data base accessible from the monitoring station.

17. A passenger management system as claimed in any of claims 13 to 16, further comprising means for receiving from at least a portion of the transceivers, with which the electronic device must register or pass, data indicating the occurrence of the registration of the electronic device.

18. A passenger management system as claimed any of claims 13 to 17, further comprising a plurality of announcement speakers geographically distributed throughout the building and means, responsive to detecting the presence of the electronic device within a region served by a specific announcement speaker, for selectively activating that specific announcement speaker to convey an audible message to the user of the electronic device.

19. A passenger management system as claimed in any of claims 13 to 18, further comprising a plurality of transceivers geographically distributed throughout the building and means, responsive to detecting the presence of the electronic device within a region of the building serviced by a specific transceiver, for selectively activating that transceiver to convey a message to the user of the electronic device.

20. A computer program element comprising computer program code for implementing a method or system as claimed in any preceding claim.

21. A computer program product comprising a computer readable storage medium having stored thereon a computer program element as claimed in claim 20.
